# EUROPEAN PATENT SPECIFICATION

(11) **EP 2 683 512 B1**
(45) Date of publication and mention of the grant of the patent: **02.01.2019**
(21) Application number: 12709979.4
(22) Date of filing: 08.03.2012
(51) Int. Cl.: B23B 31/107, B23B 51/04

(54) **QUICK CHANGE SYSTEM FOR A ROTATABLE TOOL AND BASE OF SUCH A SYSTEM**
SCHNELLWECHSELSYSTEM FÜR EIN DREHBARES WERKZEUG UND BASIS EINES SOLCHEN SYSTEMS
SYSTÈME À CHANGEMENT RAPIDE POUR OUTIL ROTATIF ET BASE D'UN TEL SYSTÈME

(30) Priority: 10.03.2011 NL 2006364
(43) Date of publication of application: 15.01.2014
(73) Proprietor: MPETechniek B.V., 2676 LE Maasdijk (ZH) (NL)
(72) Inventor: DEN BLIJKER, Edwin Leonard, NL-2681 VE Monster (ZH) (NL)
(74) Representative: Klavers, Cornelis
(86) International application number: PCT/NL2012/050142
(87) International publication number: WO 2012/121601

(56) References cited:
- EP-A1- 1 827 741
- EP-A2- 1 982 785
- US-A1- 2004 247 405
- US-B2- 7 112 016

## Description

The present invention relates to a quick - change system according to the pre-characterizing part of claim 1.

Such systems are well-known and are used, for example, in drilling tools, in particular hole saws. In said systems, the foot is placed, whether or not detachably, in a drive tool, for example an electric drilling machine which allows a quick change of the tools, in particular exclusively the hole saw.

EP 1 827 741 A1 discloses a quick-change system in accordance with the pre-characterizing portion of claim 1. In particular it discloses a longitudinal rotatable foot which ends in a pilot drill which foot can by shifted through a hole in the tool assembly after being released by pressing an unlock button provided on the tool assembly.

It is an object of the present invention to provide an improved quick - change system of the type wherein locking and unlocking operations are improved.

This object is achieved by means of a quick - change system according to claim 1.

As the operating means comprise an unlock button which is to be depressed transversely to the longitudinal direction, it becomes possible to unlock the tool using only one hand. In particular, it becomes possible to unlock the tool with a thumb and one finger, for example the index finger, on the proviso that the dimensions of the outer circumference of the part accommodating the unlock button are suitably selected. The phrase "suitably selected dimensions of the outer circumference of the part accommodating the unlock button" is to be taken to mean that the dimensions are such that a person can readily put his thumb and index finger around the part and embrace both the opposite circumferential part and simultaneously the unlock button in order to depress the latter, while pushing off against the foot.

Another advantage of the quick - change system according to the invention resides in that it is hardly susceptible to dirt. In particular the lock and unlock devices are not hampered by dirt.

In a suitable embodiment thereof, the system is furthermore largely closed and hardly any dirt or no dirt at all can penetrate into the system and block the button.

In this manner, the coupling portions, in the form of a recess and a projecting part, are integrated with the locking and unlocking means, thus enabling a compact embodiment. In addition, after the coupling portions have been uncoupled, they can be detached more readily because the required relative movement of the coupling portions can be brought about comparatively easily by the hand already present that also operates the unlock button.

In an advantageous embodiment, the outside surface of the system at the level of the unlock button is substantially cylindrical and said unlock button forms part of the outside surface and is substantially flush with the surrounding surface. By virtue thereof, the action of embracing the foot with a thumb and one finger and operating the unlock button is safer, since there are no sharp parts that could cause injury. In addition, the unlock button can be found comparatively easily by moving the thumb or the finger.

In an embodiment, the outside surface of the system has a diameter equal to or smaller than 9 cm at the level of the unlock button. Preferably, said diameter is smaller than or equal to 5 cm. These dimensions are particularly advantageous in that they facilitate taking hold of the unlock button and the adjacent part; said unlock button should not be too large. Of course, said button should be large enough to enable comfortable operation.

In a still further embodiment, the recess and the projecting part, in the coupled position, co-operate as a result of being interconnected in a form - coupled manner, thereby transferring the rotation of the foot about its longitudinal axis to the tool assembly. By virtue thereof, further means for transferring the rotation can be dispensed with, which enhances simplicity.

In another embodiment, said sliding piece is provided with an opening through which, in the assembled state of the system, the projecting part of one of the coupling portions extends. By virtue thereof, a reliably operating, and also simple, sliding piece can be obtained.

A subsequent advantageous embodiment is achieved when the sliding piece and the unlock button are in one piece. As a result, fewer component parts are required and the system can be assembled more easily.

Advantageous embodiments are described in the dependent claims.

The invention will now be explained in greater detail with reference to the accompanying figures, in which corresponding parts are indicated by means of the same reference numerals. In the figures:
Figure 1A is a side view of an embodiment of a quick - change system S according to the invention comprising a hole saw,
Figure 1B is a sectional view of the quick - change system of Figure 1A, taken along the line B-B in Figure 1A,
Figure 1C is a sectional view of the quick - change system of Figure 1A, taken along the line C-C in Figure 1A, and
Figure 2 is an exploded view of the foot of the quick - change system of Figure 1A.

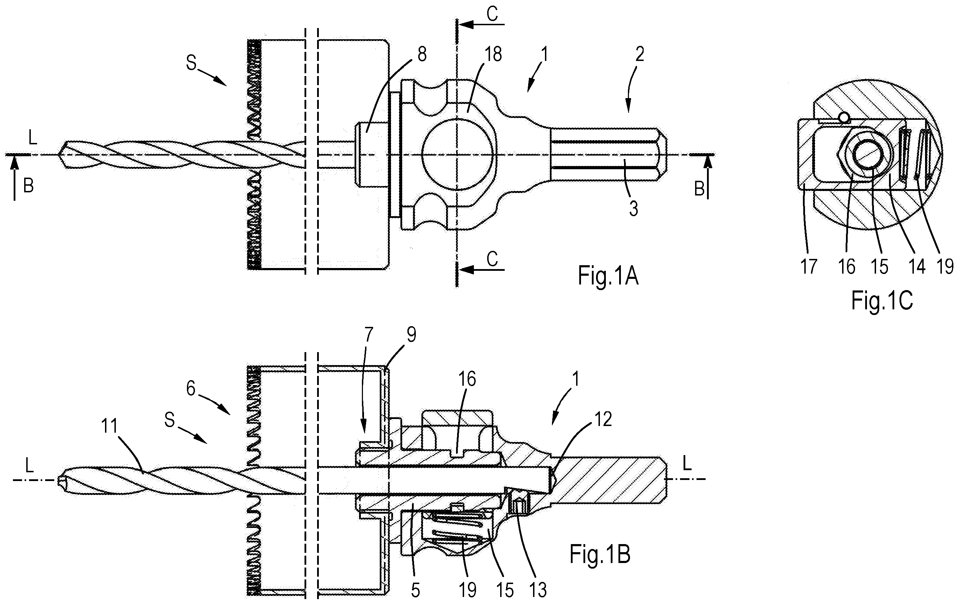

Figure 1A shows an embodiment of the quick - change system S according to the invention comprising a hole saw, wherein the system S comprises a foot 1 having a flattened part 3 at one end portion 2 thereof. Said end portion 2 fits into a chuck of a drilling machine, for example a pillar drilling machine or a hand drilling machine. By virtue of said flattened part 3, the drive torque can be transferred from the drilling machine to the foot 1, thereby causing rotation of the latter.

The foot 1 also has a longitudinal axis L which essentially is also an axis of symmetry. Viewed along the longitudinal axis L, an expanded part having a recess 4 is situated next to the end portion 2, said expanded part serving as a first coupling portion for a projecting part 5 fitted into the recess 4, which projecting part serves as a second coupling portion of the tool assembly 6. The latter coupling portion comprises an adapter 7 with the projecting part 5 and a hole saw 9 of a standard, commercially available type mounted to a threaded end portion 8 of the adapter 7, which hole saw is indicated only by means of interrupted lines in Figures 1A and 1B. In the embodiment shown, the hole saw can be removed from the adapter 8, but obviously there may be embodiments where said parts are integrated into a single piece. When the hole saw is detachable, this has the advantage, however, that commercially available types of hole saws can be used, so that custom-made hole saws are not required. The adapter 8 has a through hole on the longitudinal axis thereof, which longitudinal axis coincides with the longitudinal axis L of the foot 1. A centring drill 11 is inserted into the through hole, which centring drill additionally extends over some distance into a hole 12 of the foot situated on the longitudinal axis L in order to be reliably aligned with the foot. A locking screw 13 screwed into the foot 1 retains the centring drill.

Both the projecting part 5 of the adapter 8 and the recess 4 of the foot 1 are provided with a hexagonal profile, as a result of which rotation of the foot 1 relative to the adapter 7 is precluded. This is necessary in order to be able to drive the hole saw 9 from the drilling machine (not shown) via the foot 1.

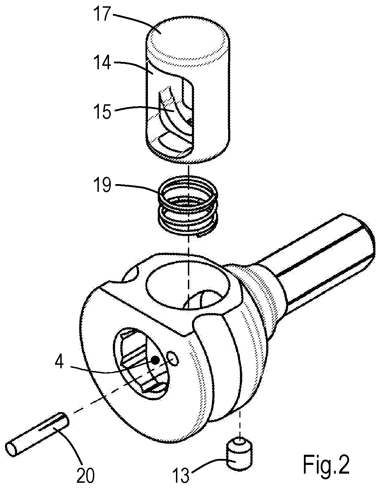

The projecting part 5 of the adapter 7 and the recess 4 of the foot 1 are not only coupled together, they are also interlocked via a sliding piece 14 (see Fig. 1C) in the foot 1 which is arranged in the foot so as to be slidable in the transverse direction with respect to the longitudinal axis L, which sliding piece 14 with an edge 15, in the position shown, engages in a circumferential slot 16 of the adapter 7. The sliding piece 14 thus locks the adapter 7 in position in the foot 1. The sliding piece 14 is integral with the unlock button 17 and, as is most clearly shown in Figure 2, is cylindrical in shape with an elongated opening 18, through which the projecting part 2 of the adapter 7 extends. In the example shown, the sliding piece 14 is made of synthetic resin by means of injection moulding. A helical spring 19 presses the edge 15 of the sliding piece 14 into the circumferential slot 16 of the adapter 7, so that the adapter cannot become detached. The centre of gravity of the sliding piece 14 with unlock button 17, which is comparatively lightweight because it is made of synthetic resin, is situated between the longitudinal axis L and the unlock button 17, so that when the system is brought into rotation for the purpose of drilling a hole, the edge 15 in the circumferential slot 16 remains in place. It is thus prevented that rotation causes the adapter 7 to become accidentally unlocked and possibly detached, thereby possibly causing damage to belongings and even injury to persons.

The unlock button 17 is situated in a somewhat flattened part 18 of the foot and projects a few millimeters from said flattened part 18, as a result of which it can be found by touch or "found blindfold" by the operator. The unlock button 17 is cylindrical and provided with a rounded edge. By virtue of these adaptations and a suitably selected diameter of the foot 1, in this case 40 mm, a person can readily and comparatively safely put his/her hand around the foot 1 and actuate the unlock button 17 with thumb and index finger, or thumb and middle finger, and subsequently depress the unlock button 17. Also when the system coasts to rest after a drilling and sawing operation, the rounded shape, free of sharp edges, of the foot 1 comprising unlock button 17 makes the risk of injury or pain to the operator's hand small.

When the unlock button 17 is depressed, the sliding piece slides in the direction in which the helical spring 19 is compressed. As a result, the engagement of the edge 15 of the sliding piece 14 is eliminated and hence also the locked position of the adapter 7, or the projecting part 5 thereof, on the foot or the recess 4 thereof. As a result of this unlocking, the adapter can be freely removed from the foot by moving it along the longitudinal axis L. This can be done, for example, by moving the hand that keeps the unlock button depressed in the direction of the hole saw 9, and as soon as the adapter 7 has moved over some distance, the unlock button can be released without the risk that it will accidentally re-lock, since the sliding piece is no longer at the level of the circumferential slot 16, and consequently the tool assembly can be removed from the foot 1.

After the removal of the tool assembly, the presence of a locking pin 20 prevents the sliding piece 14 from falling or being ejected from the foot 7. Subsequently, the foot 1 is ready to receive a new adapter 7, which is then locked automatically because the helical spring 19 presses the edge 15 of the sliding piece 14 into the circumferential slot 16 as soon as this edge 15 is at the same level as the circumferential slot 16.

Variants of the above exemplary embodiment are possible. For example, the centring drill may be dispensed with, or the unlock button 17 may be provided with an operating surface which projects laterally with respect to the sliding piece 14 and thus covers a part of the circumferential surface of the foot 1. As a result, the operating surface of the button is enlarged. It is alternatively possible that the lock button is an electric touch switch or pressure switch.

## Claims

1. Quick-change system (S) for a rotatable tool (9, 11), comprising:
- a rotatable foot (1) having a longitudinal axis (L) and comprising a first coupling portion (4) situated on the longitudinal axis (L),
- a tool assembly (7) comprising a second coupling portion (5) situated on said longitudinal axis (L),
which two coupling portions (4, 5) can be coupled to one another and, in the coupled state, the foot (1) supports the tool assembly (7) in a rotatable manner, and
- operating means (17) which are suitable for locking and unlocking the two coupling portions (4, 5), and which comprise an unlock button (17) which is to be pressed transversely to the longitudinal direction,
whereby one of the two coupling portions (4, 5) comprises a projecting part (5) that fits into a recess (4) in the other one of the coupling portions (4, 5), and the projecting part (5) is provided with a nick (16) into which a locking member (14, 15) connected with the unlock button (17) fits, which locking member (14, 15) comprises a sliding piece (14) in one of the coupling portions (4, 5), which sliding piece (14) is operated by the unlock button (17) and arranged transversely to the longitudinal axis (L), and said sliding piece (15) engages in said nick (16) in the other one of the coupling portions (4, 5), **characterized in that**
the unlock button (17) and the sliding piece (14) are located in the foot (1).

2. The system (S) according to claim 1, **characterized in that** the outside surface of the system (S) at the level of the unlock button (17) is substantially cylindrical and said unlock button (17) forms part of the outside surface and is substantially flush with the surrounding surface.

3. The system (S) according to claim 1 or 2, **characterized in that** the outside surface of the system (S) has a diameter equal to or smaller than 6 cm, preferably smaller than or equal to 5 cm, at the level of the unlock button (17).

4. The system (S) according to any one of the preceding claims, **characterized in that** the recess (4) and the projecting part (5), in the coupled position, co-operate as a result of being interconnected in a form - coupled manner, thereby transferring the rotation of the foot (1) about its longitudinal axis (L) to the tool assembly (7).

5. The system (S) according any one of the preceding claims, **characterized in that** said sliding piece (14) is provided with an opening through which, in the assembled state of the system (S), the projecting part (5) of one of the coupling portions (4, 5) extends.

6. The system (S) according to any one of the preceding claims, **characterized in that** the sliding piece (14) and the unlock button (17) are in one piece.

7. The system (S) according to any one of the preceding claims, **characterized in that** the sliding piece (14) is provided with resetting means in the form of a helical spring (19).

8. The system (S) according to any one of the preceding claims, **characterized in that** the tool assembly (7, 9) comprises an adapter (7) and a tool (9) which can be detached therefrom.

9. The system (S) according to any one of the claims 1 to 8, **characterized in that** the tool assembly (7, 9) comprises a hole saw (9).

10. The system (S) according to claim 8 or 9, **characterized in that** the tool assembly (7, 9) comprises a centring drill (11) which is to be inserted into the foot (1) by the adapter (7).

## Patentansprüche

1. Schnellwechselsystem (S) für ein drehbares Werkzeug (9, 11), umfassend:
- einen drehbaren Fuß (1), der eine Längsachse (L) aufweist und einen ersten Kopplungsabschnitt (4) umfasst, der sich auf der Längsachse (L) befindet,
- eine Werkzeuganordnung (7), die einen zweiten Kopplungsabschnitt (5) umfasst, der sich auf der Längsachse (L) befindet,
wobei die zwei Kopplungsabschnitte (4, 5) miteinander gekoppelt werden können und der Fuß (1) im gekoppelten Zustand die Werkzeuganordnung (7) auf drehbare Weise stützt, und
- Betätigungsmittel (17), die zum Ver- und Entriegeln der beiden Kopplungsabschnitte (4, 5) geeignet sind, und die einen Entriegelungsknopf (17) umfassen, der quer zur Längsrichtung zu drücken ist,
wodurch einer der beiden Kopplungsabschnitte (4, 5) einen vorstehenden Teil (5) umfasst, der in eine Aussparung (4) in dem anderen der Kopplungsabschnitte (4, 5) passt, und wobei der vorstehende Teil (5) mit einer Kerbe (16) bereitgestellt ist, in die ein Verriegelungselement (14, 15), das mit dem Entriegelungsknopf (17) verbunden ist, passt, wobei das Verriegelungselement (14, 15) ein Gleitstück (14) in einem der Kopplungsabschnitte (4, 5) umfasst, wobei das Gleitstück (14) durch den Entriegelungsknopf (17) betätigt wird und quer zur Längsachse (L) angeordnet ist, und wobei das Gleitstück (14) in die Kerbe (16) in dem anderen der Kopplungsabschnitte (4, 5) eingreift,
**dadurch gekennzeichnet, dass**
der Entriegelungsknopf (17) und das Gleitstück (14) in dem Fuß (1) angeordnet sind.

2. System (S) nach Anspruch 1, **dadurch gekennzeichnet, dass** die Außenfläche des Systems (S) in der Höhe des Entriegelungsknopfes (17) im Wesentlichen zylindrisch ist und der Entriegelungsknopf (17) einen Teil der Außenfläche bildet und im Wesentlichen bündig mit der umgebenden Fläche ist.

3. System (S) nach Anspruch 1 oder 2, **dadurch gekennzeichnet, dass** die Außenfläche des Systems (S) einen Durchmesser aufweist, der in der Höhe des Entriegelungsknopfes (17) gleich oder kleiner als 6 cm, vorzugsweise kleiner oder gleich 5 cm ist.

4. System (S) nach einem der vorhergehenden Ansprüche, **dadurch gekennzeichnet, dass** die Aussparung (4) und der vorstehende Teil (5) in der gekoppelten Stellung als Ergebnis darauf, dass sie miteinander auf formschlüssige Weise gekoppelt sind, zusammenwirken, wodurch die Drehung des Fußes (1) um seine Längsachse (L) auf die Werkzeuganordnung (7) übertragen wird.

5. System (S) nach einem der vorhergehenden Ansprüche, **dadurch gekennzeichnet, dass** das Gleitstück (14) mit einer Öffnung bereitgestellt ist, durch die sich im zusammengesetzten Zustand des Systems (S), der vorstehende Teil (5) von einem der Kopplungsabschnitte (4, 5) erstreckt.

6. System (S) nach einem der vorhergehenden Ansprüche, **dadurch gekennzeichnet, dass** das Gleitstück (14) und der Entriegelungsknopf (17) einstückig gebildet sind.

7. System (S) nach einem der vorhergehenden Ansprüche, **dadurch gekennzeichnet, dass** das Gleitstück (14) mit Rückstellmitteln in Form einer Schraubenfeder (19) bereitgestellt ist.

8. System (S) nach einem der vorhergehenden Ansprüche, **dadurch gekennzeichnet, dass** die Werkzeuganordnung (7, 9) einen Adapter (7) und ein Werkzeug (9), das davon gelöst werden kann, umfasst.

9. System (S) nach einem der Ansprüche 1 bis 8, **dadurch gekennzeichnet, dass** der die Werkzeuganordnung (7, 9) eine Lochsäge (9) umfasst.

10. System (S) nach Anspruch 8 oder 9, **dadurch gekennzeichnet, dass** die Werkzeuganordnung (7, 9) einen Zentrierbohrer (11) umfasst, der durch den Adapter (7) in den Fuß (1) einzusetzen ist.

## Revendications

1. Système de changement rapide (S) pour un outil rotatif (9, 11), comprenant :
- un pied rotatif (1) présentant un axe longitudinal (L) et comprenant une première partie d'accouplement (4) située sur l'axe longitudinal (L),
- un ensemble d'outil (7) comprenant une deuxième partie d'accouplement (5) situé sur ledit axe longitudinal (L),
lesdites deux parties d'accouplement (4, 5) pouvant être accouplées l'une à l'autre et, dans l'état accouplé, le pied (1) supporte l'ensemble d'outil (7) de façon rotative, et
- des moyens de commande (17) adaptés pour verrouiller et déverrouiller les deux parties d'accouplement (4, 5), et comprenant un bouton de déverrouillage (17) destiné à être pressé transversalement à la direction longitudinale,
moyennant quoi d'une des deux parties d'accouplement (4, 5) comprend une partie faisant saillie (5) susceptible de s'ajuster dans une cavité (4) dans l'autre des parties d'accouplement (4, 5), et la partie faisant saillie (5) est pourvue d'une entaille (16) dans laquelle s'ajuste un élément de verrouillage (14, 15) relié au bouton de déverrouillage (17), ledit élément de verrouillage (14, 15) comprenant une pièce coulissante (14) dans l'une des parties d'accouplement (4, 5), ladite pièce coulissante (14) étant commandée par le bouton de déverrouillage (17) et disposée transversalement à l'axe longitudinal (L), et ladite pièce coulissante (14) s'engageant dans ladite entaille (16) dans l'autre des parties d'accouplement (4, 5),
**caractérisé en ce que**
le bouton de déverrouillage (17) et la pièce coulissante (14) se trouvent dans le pied (1).

2. Système (S) selon la revendication 1, **caractérisé en ce que** la surface extérieure du système (S) au niveau du bouton de déverrouillage (17) est substantiellement cylindrique et ledit bouton de déverrouillage (17) fait partie de la surface extérieure et disposé substantiellement en affleurement avec la surface environnante.

3. Système (S) selon la revendication 1 ou 2, **caractérisé en ce que** la surface extérieure du système (S) présente un diamètre égal ou inférieur à 6 cm, de préférence inférieur ou égal à 5 cm, au niveau du bouton de déverrouillage (17).

4. Système (S) selon l'une quelconque des revendications précédentes, **caractérisé en ce que** la cavité (4) et la partie faisant saillie (5), dans la position accouplée, coopèrent du fait qu'elles sont interconnectées par complémentarité de forme, transmettant ainsi la rotation du pied (1) autour de son axe longitudinal (L) à l'ensemble d'outil (7).

5. Système (S) selon l'une quelconque des revendications précédentes, **caractérisé en ce que** ladite pièce coulissante (14) est pourvue d'une ouverture à travers laquelle, dans l'état assemblé du système (S), s'étend la partie faisant saillie (5) de l'une des parties d'accouplement (4, 5).

6. Système (S) selon l'une quelconque des revendications précédentes, **caractérisé en ce que** la pièce coulissante (14) et le bouton de déverrouillage (17) forment une seule pièce.

7. Système (S) selon l'une quelconque des revendications précédentes, **caractérisé en ce que** la pièce coulissante (14) est pourvue d'un moyen de rappel sous la forme d'un ressort hélicoïdal (19).

8. Système (S) selon l'une quelconque des revendications précédentes, **caractérisé en ce que** l'ensemble d'outil (7, 9) comprend un adaptateur (7) et un outil (9) apte à être détaché de celui-ci.

9. Système (S) selon l'une quelconque des revendications 1 à 8, **caractérisé en ce que** l'ensemble d'outil (7, 9) comprend une scie-cloche (9).

10. Système (S) selon la revendication 8 ou 9, **caractérisé en ce que** l'ensemble d'outil (7, 9) comprend un foret de centrage (11) destiné à être inséré dans le pied (1) par l'adaptateur (7).
